# DEMANDE DE BREVET EUROPEEN

(11) **EP 4 842 041 A1**
(43) Date de publication de la demande: **18.11.2026**
(21) Numéro de dépôt: 26177937.5
(22) Date de dépôt: 11.05.2026
(51) Int. Cl.: H04W 24/04, H04B 17/391, H04W 24/02, H04W 24/08

(54) **PROCEDE, DISPOSITIF ET PROGRAMME DE PLANIFICATION D'UNE OPERATION DE MAINTENANCE DANS UN RESEAU RADIOFREQUENCE**

(30) Priorité: 16.05.2025 FR 2505271
(71) Demandeur: Orange, 92130 Issy-les-Moulineaux (FR)
(72) Inventeur: Rebiffé, Jean, 92326 Chatillon (FR)

(57) **Abrégé**

L'invention concerne un procédé de planification d'au moins une opération de maintenance dans une zone de couverture d'un émetteur radiofréquence, le procédé comprenant des étapes de collecte (200) d'une pluralité de données temporelles représentatives d'une qualité d'un lien radio entre l'émetteur et au moins un récepteur présent dans ladite zone de couverture de l'émetteur pour former au moins une série temporelle de données de qualité, d'estimation (201) d'au moins une valeur représentative d'une qualité du lien radio pour au moins une date future par application de ladite au moins une série temporelle à un modèle prédictif, de détermination (202), à partir des valeurs estimées, d'une date future à laquelle la qualité du lien radio est susceptible d'atteindre un premier seuil, et génération (203) d'un événement associé au lien radio comprenant au moins une date inférieure ou égale à la date déterminée.

## Description

### Domaine Technique de l'Invention

La présente invention concerne le domaine des systèmes de communication radiofréquence, en particulier la gestion de la qualité de service (QoS) des liens radio. Elle vise à améliorer la fiabilité et la performance des réseaux de communication en anticipant les dégradations potentielles causées par des facteurs environnementaux.

### État de la Technique

Dans les systèmes de communication par micro-ondes, la qualité de service peut se détériorer au fil du temps en raison de divers facteurs environnementaux, tels que la croissance de la végétation ou la construction de nouveaux bâtiments. Ces modifications de l'environnement peuvent progressivement obstruer les signaux radio, entraînant une diminution du rapport signal/bruit (SNR) et, par conséquent, une dégradation de la QoS (Qualité de Service). Les techniques actuellement mises en œuvre pour éviter ces problèmes comprennent par exemple des opérations d'élagage préventif ou curatif de la végétation, ainsi que des ajustements de l'infrastructure pour minimiser les interférences. Cependant, l'étendue de certains réseaux sans fil et la lenteur de l'évolution de l'environnement rend très difficile l'anticipation de ces perturbations. Ainsi, les méthodes classiques pour mitiger l'impact de l'environnement sur la QoS sont souvent réactives plutôt que proactives, ce qui peut entraîner des interruptions de service plus ou moins longues et un coût significatif.

Il existe donc un besoin pour une technique permettant d'anticiper efficacement les pertes de QoS liées à l'évolution de l'environnement.

### Résumé de l'invention

A cet effet, il est proposé un procédé de planification d'au moins une opération de maintenance dans une zone de couverture d'un émetteur radiofréquence, le procédé comprenant les étapes suivantes :
- Collecte d'une pluralité de données temporelles représentatives d'une qualité d'un lien radio entre l'émetteur et au moins un récepteur présent dans ladite zone de couverture de l'émetteur pour former au moins une série temporelle de données de qualité,
- Estimation d'au moins une valeur représentative d'une qualité du lien radio pour au moins une date future par application de ladite au moins une série temporelle à un modèle prédictif,
- Détermination, à partir des valeurs estimées, d'une date future à laquelle la qualité du lien radio est susceptible d'atteindre un premier seuil,
- Génération d'un événement associé au lien radio comprenant au moins une date inférieure ou égale à la date déterminée.

Il est ainsi proposé de collecter au moins une série temporelle de mesures de qualité de service observée par un ou plusieurs terminaux dans la zone de couverture. La collecte d'une série temporelle de mesure de QoS et l'application de ces données à un modèle de prédiction permet de faire apparaître une tendance d'évolution des mesures. En comparant les valeurs prédites à un ou plusieurs seuils déterminés au préalable, le procédé permet de déterminer une date à laquelle la qualité de service atteindra (ou sera susceptible d'atteindre avec une certaine probabilité) une valeur critique. La génération d'un événement ou d'une alerte à l'approche de la date ainsi déterminée permet d'anticiper et de planifier des opérations de maintenance, comme un élagage ou une modification de l'infrastructure ou l'application d'une configuration particulière à l'émetteur.

Dans le cadre de la présente demande, le terme « radiofréquence » désigne l'ensemble de la portion du spectre électromagnétique utilisée pour toute forme de communication sans fil. Ce périmètre couvre notamment les ondes dont les fréquences varient de quelques kilohertz à plusieurs dizaines, voire des centaines de gigahertz, englobant ainsi les transmissions classiques de radiodiffusion, les communications mobiles (allant de la 2G à la 5G et au-delà), les systèmes de communication par satellite, ainsi que les réseaux locaux sans fil tels que le WiFi et les technologies de proximité comme le Bluetooth. La définition inclut toutes les techniques de modulation, de propagation, et de traitement des signaux radio utilisés pour la transmission de données, de la voix et des images dans divers environnements et applications.

Le terme « série temporelle » désigne ici un ensemble de mesures ou d'observations collectées à différents instants successifs, chaque donnée étant associée à un horodatage explicite ou implicite. Ces mesures, qui reflètent l'évolution d'un paramètre (tel qu'un indicateur de qualité de service) au fil du temps, permettent d'identifier des tendances, des variations saisonnières ou des anomalies. La série temporelle est ainsi utilisée pour alimenter un modèle prédictif afin de prédire l'évolution future du paramètre étudié.

Selon un mode de réalisation particulier, le procédé est tel que le modèle prédictif est un modèle autorégressif.

Un modèle autorégressif est particulièrement adapté pour prédire l'évolution d'une série temporelle et présente l'avantage de ne pas nécessiter d'entrainement préalable. En effet, un tel modèle permet de faire régresser une valeur d'une série chronologique par rapport aux valeurs précédentes de cette même série chronologique, c'est-à-dire par rapport aux valeurs de QoS collectées au fil du temps.

Dans un mode de réalisation particulier, les données collectées sont appliquées à un deuxième modèle prédictif de classification adapté pour déterminer une cause de l'évolution de la qualité du lien radio, l'événement généré comprenant au moins une date ajustée selon la cause déterminée.

Il est ainsi proposé d'appliquer un deuxième modèle prédictif de classification, entrainé au préalable pour prédire une cause d'une modification de la qualité de service observée, à partir d'un ensemble de données temporelles de qualité. Ainsi le procédé détermine la cause d'une baisse de qualité à partir de l'évolution des observations. Par exemple, le procédé permet de déterminer si l'évolution est due à la croissance de la végétation, à la construction d'un bâtiment, à l'accumulation ou à la fonte de neige, à la formation d'une dune de sable, etc. Une telle disposition permet avantageusement d'ajuster une date d'intervention signalée dans l'alerte selon la cause, et donc selon le type d'opération de maintenance nécessaire pour traiter cette cause (une opération d'élagage et une modification d'infrastructure pour prendre en compte un nouveau bâtiment ne nécessite pas la même anticipation).

Le deuxième modèle est par exemple un modèle de classification entrainé au préalable à partir de mesures qualité de service labélisées ayant été collectées dans des situations de croissance de végétation et de construction de bâtiments dans une zone de couverture d'un émetteur radiofréquence.

Selon une réalisation particulière, le procédé est tel que les données collectées comprennent un rapport signal/bruit.

Le SNR (Signal to Noise Ratio) est directement corrélé à une qualité de service. Ainsi, en effectuant une régression sur des mesures de SNR, le procédé permet de déterminer efficacement une date à laquelle la qualité de service descendra au-dessous d'un seuil particulier.

Selon un mode particulier de réalisation, le procédé est tel qu'une série temporelle appliquée au premier modèle comprend des données collectées régulièrement sur une période d'au moins un an.

La collecte de données sur une telle période temporelle permet avantageusement de tenir compte des variabilités saisonnières, ce qui est particulièrement intéressant pour prédire l'impact de la croissance de la végétation sur la qualité de service.

Selon une réalisation particulière, le procédé est tel que les données collectées sont obtenues auprès d'une pluralité de terminaux mobiles évoluant dans ladite zone de couverture.

Les mesures sont ainsi réalisées par différents terminaux utilisateur au cours de leur utilisation. On évite ainsi le déploiement de dispositifs de mesures dédiés. Une telle disposition permet en outre de garantir un ensemble de mesures exhaustif et hormogène sur un territoire, comprenant notamment les zones où circulent effectivement des utilisateurs.

Selon un mode de réalisation particulier, les données collectées sont groupées selon une donnée de localisation associée auxdites données collectées pour former une pluralité séries temporelles distinctes.

En collectant une donnée de localisation associée à chaque mesure, il est possible de construire une série temporelle de mesures spécifique pour un emplacement particulier à partir de données collectées par différents terminaux. L'agrégation de mesures réalisées par différents terminaux à un emplacement particulier permet d'obtenir des séries temporelles plus complètes pour une pluralité d'emplacement. Cela permet une surveillance de la qualité de service en tout point d'un réseau cellulaire.

Selon un autre aspect, l'invention concerne un dispositif de planification d'au moins une opération de maintenance dans une zone de couverture d'un émetteur radiofréquence, le dispositif comprenant un processeur couplé à une mémoire dans laquelle sont enregistrées des instructions configurées pour mettre en œuvre les étapes suivantes :
- Collecte d'une pluralité de données temporelles représentatives d'une qualité d'un lien radio entre l'émetteur et au moins un récepteur présent dans ladite zone de couverture de l'émetteur pour former au moins une série temporelle de données de qualité,
- Estimation d'au moins une valeur représentative d'une qualité du lien radio pour au moins une date future par application de ladite au moins une série temporelle à un modèle prédictif,
- Détermination, à partir des valeurs estimées, d'une date future à laquelle la qualité du lien radio est susceptible d'atteindre un premier seuil,
- Génération d'un événement associé au lien radio comprenant au moins une date inférieure ou égale à la date déterminée.

Il est également proposé un serveur informatique comprenant un dispositif de planification tel que décrit précédemment.

Dans un mode particulier de réalisation, les différentes étapes du procédé de planification sont déterminées par des instructions de programmes d'ordinateur.

En conséquence, l'invention vise aussi un programme d'ordinateur comportant des instructions adaptées à la mise en œuvre des étapes d'un procédé de planification tel que décrit ci-dessus, lorsque le programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information lisible par un ordinateur sur lequel est enregistré un programme d'ordinateur comprenant des instructions pour l'exécution des étapes d'un procédé de planification tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, une mémoire flash, ou encore un moyen d'enregistrement magnétique, comme un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé en question.

Les dispositifs, serveurs, programmes et supports d'information présentent des avantages analogues à ceux conférés par le procédé auquel ils correspondent.

### Brève description des figures

D'autres caractéristiques et avantages apparaîtront à la lecture d'un mode de réalisation préféré décrit en référence aux figures annexées parmi lesquelles :
- [Fig. 1] La figure 1 représente un environnement adapté pour la mise en œuvre du procédé de planification selon une réalisation particulière de l'invention,
- [Fig. 2] La figure 2 est un ordinogramme illustrant les principales étapes d'un procédé de planification selon un mode de réalisation particulier,
- [Fig. 3] La figure 3 est un graphique montrant une série temporelle d'observations et des prédictions pour une période future,
- [Fig. 4] La figure 4 représente l'architecture d'un dispositif adapté pour mettre en œuvre le procédé de planification selon une réalisation particulière.

### Description détaillée

Dans la description qui va suivre, des modes de réalisation sont décrits sur la base d'exemples non limitatifs permettant d'expliciter les concepts sur lesquels se base l'invention. En particulier, bien que les exemples et la terminologie employés peuvent se référer à certaines technologies ou standards bien connus, ces références ne sont pas limitatives et d'autres technologies peuvent être adaptées pour mettre en œuvre les concepts de l'invention.

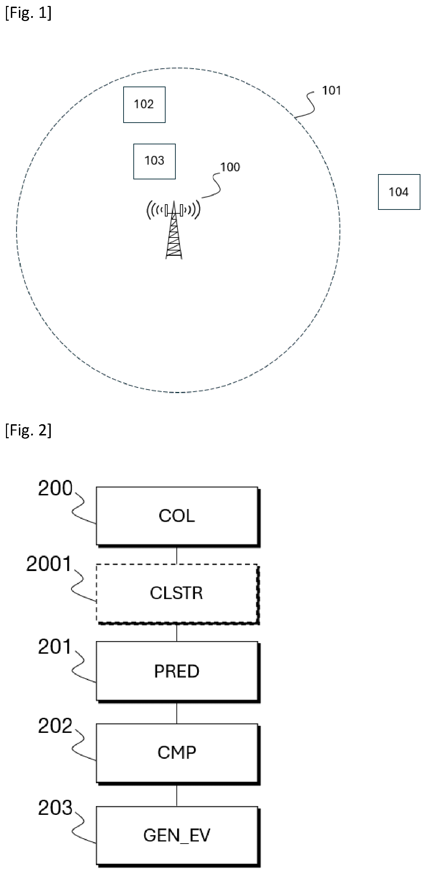

La figure 1 illustre un environnement adapté pour la mise en œuvre du procédé de planification. La figure 1 montre un émetteur 100, par exemple une station de base d'un réseau cellulaire dont la zone de couverture est notée 101. Il s'agit par exemple d'un réseau 2G, 3G, 4G, 5G, ou de technologie ultérieure, un réseau WiFi ou encore Wimax. Cette zone de couverture représente l'étendue géographique dans laquelle les signaux émis par la station de base 100 peuvent être reçus par les terminaux mobiles avec une certaine qualité de service. Bien entendu, d'autres environnements peuvent être envisagés pour mettre en œuvre l'invention, par exemple la zone de couverture peut couvrir uniquement une portion de la zone 101 définie par un faisceau directionnel issu de la station de base 100.

L'environnement représenté sur la figure 1 comprend également un dispositif récepteur 102, par exemple un terminal de communication évoluant dans la zone de couverture 101. Le terminal 102 peut communiquer avec la station de base 100 par l'intermédiaire d'un lien radiofréquence, et est adapté pour évaluer la qualité du lien radio à partir de mesures qui permettent d'obtenir une valeur représentative de cette qualité de service à un instant donné.

Par exemple, de façon non limitative, le terminal 102 peut évaluer la qualité de service offerte par le lien radio à partir d'un ou plusieurs des indicateurs suivants, ou d'un indicateur résultant d'une combinaison de tels indicateurs :
- SNR (rapport signal/bruit ),
- RSSI (Indicateur de force du signal reçu),
- PDSF (Signal de référence Puissance reçue),
- RSQ (Qualité du signal de référence reçu),
- SINR (Rapport signal/interférence plus bruit)
- SNIR (Rapport signal/bruit plus interférence),
- BER (Bit Error Rate).

Le terminal peut aussi évaluer la qualité du lien radio à partir d'un taux de pertes de paquets, d'une latence, d'un RTT (Round Trip Time) ou de tout autre paramètre représentatif de la qualité de service offerte par le lien de communication avec la station de base 100.

Ces différents indicateurs peuvent également être déterminés par la station de base 100 afin par exemple d'estimer la qualité de service du canal montant ou pour déterminer une qualité globale du lien.

L'environnement de la figure 1 comprend aussi un serveur 104 appartenant à un réseau de communication. Le réseau de communication auquel appartient le serveur 104 lui permet d'échanger des messages avec le terminal 102 et la station de base 100, et notamment de collecter des mesures ou indicateurs déterminés par le terminal 102 ou la station de base 100 et de les stocker dans une base de données en association avec une date de collecte ou de mesure.

L'environnement représenté sur la figure 1 comprend également un obstacle évolutif 103 interposé entre le terminal 102 et la station de base 100, qui est susceptible d'affecter la qualité des signaux radio échangés entre la station de base 100 et le terminal 102. L'obstacle 103 est par exemple un ouvrage en construction, tel qu'un bâtiment, un mur, ou encore un pont situé entre la station de base 100 et le terminal 102. Au fur et à mesure de sa construction, l'obstacle 103 peut progressivement obstruer le signal radio, entraînant une réduction de la qualité du lien radio entre la station de base 100 et le terminal 102. L'obstacle 103 peut également correspondre à de la végétation, par exemple un ou plusieurs arbres situés entre le terminal 102 et la station de base 100. La croissance de cette végétation peut également altérer progressivement la qualité du lien radio entre la station de base et le terminal 102. La nature de l'obstacle n'est pas limitative, l'invention pouvant s'appliquer sans modification à des obstacles de nature différente, comme une accumulation de neige, une dune de sable, un terril, etc.

L'obstacle 103 présente des caractéristiques d'évolution temporelles et structurelles qui dépendent de sa nature. Par exemple, un bâtiment en construction peut augmenter en hauteur et en densité de matériaux avec l'avancement des travaux, tandis qu'un arbre peut croître en volume de feuillage et de hauteur. Ils ont également un rythme d'évolution qui leur est propre.

On précise que l'environnement de la figure 1 est donné à titre d'exemple non limitatif pour illustrer un mode particulier de réalisation du procédé de planification. L'environnement peut ainsi comprendre une pluralité de terminaux 102 de différente nature (par exemple des terminaux mobiles ou fixes, des objets ou véhicules connectés) et une pluralité d'obstacles 103 de différente nature. En outre la station de base 100 peut être un émetteur radiofréquence d'un autre type, par exemple un émetteur WiFi, Wimax, ou un satellite. L'émetteur 100 et la récepteur 102 peuvent également constituer un système de transmission radiofréquence point à point.

Un mode de réalisation particulier du procédé de planification va maintenant être décrit en référence aux figures 1 et 2.

Lors d'une première étape 200, le serveur 104 collecte une pluralité de mesures temporelles représentatives d'une qualité de la transmission entre la station de base 100 et un ou plusieurs terminaux 102 présents dans la zone de couverture 101. Pour cela, le serveur 104 est configuré pour recevoir des messages en provenance du terminal 102 et/ou de la station de base 100 par l'intermédiaire d'un réseau de communication non représenté sur la figure 1. Un tel message comprend notamment une valeur représentative de la qualité d'un lien radiofréquence entre la station de base 100 et le terminal concerné, dans le sens montant et/ou descendant. La valeur représentative de la qualité d'un lien radiofréquence transmise par un terminal est obtenue par le terminal à partir d'au moins une mesure d'un SNR, d'un RSSI, d'un PDSF (Signal de référence Puissance reçue), d'un RSQ (Qualité du signal de référence reçu), d'un SINR (Rapport signal/interférence plus bruit) ou d'un SNIR (Rapport signal/bruit plus interférence). Cette valeur peut aussi être déterminée à partir d'un taux de pertes de paquets, ou d'une latence ou d'un BER (Bit Error Rate) ou de toute autre mesure pertinente.

Le serveur 104 associe une donnée d'horodatage à chaque valeur de qualité de du lien radio reçue. La donnée d'horodatage peut correspondre à l'instant de la mesure de qualité du lien, elle est par exemple transmise par le terminal 102 ou la station de base 100 et reçue par le serveur 104 dans un message comprenant au moins un indicateur de qualité du lien. En variante, la donnée d'horodatage est déterminée par le serveur 104 et correspond à l'instant de réception par le serveur 104 d'un indicateur de qualité d'un lien radio. La donnée d'horodatage peut aussi consister en un intervalle entre des mesures, par exemple un délai depuis la dernière mesure. Lorsque des mesures sont collectées régulièrement, la donnée d'horodatage peut être implicite et correspondre à la fréquence des mesures. Dans ce dernier cas la donnée d'horodatage est implicitement associée aux mesures de qualité.

Les données de qualité de lien radio sont mémorisées par le serveur 104 dans une base de données temporelle pour constituer une série temporelle de mesures de qualité du lien radio.

Les données sont collectées de préférence sur une période d'au moins un an afin de prendre en compte la saisonnalité qui influence le rythme de croissance de la végétation.

Selon une réalisation particulière, le serveur 104 associe une donnée de localisation à chaque indicateur de qualité de lien radio reçu. Une telle donnée de localisation correspond à l'emplacement géographique auquel a été réalisée la mesure de qualité de service. Il peut s'agir d'une localisation absolue dans un système géodésique, comme une longitude et une latitude, ou un emplacement relatif à la station de base 100 donnée sous forme de coordonnées polaires par exemple, ou tout autre donnée permettant d'identifier une zone ou un point géographique particulier correspondant à la mesure de qualité. Cette donnée de localisation peut être obtenue par le serveur 104 de différentes manières. Elle peut par exemple être transmise par le terminal 102 ou la station de base 100 dans un message comprenant la valeur représentative de la qualité du lien, ou obtenue en interrogeant un serveur de localisation permettant d'accéder à la position du terminal 102.

Selon une réalisation particulière, lorsque des données de localisation sont associées aux indicateurs de qualité du lien radio collectés par le serveur 104, le serveur détermine des séries temporelles distinctes pour une pluralité de zones géographiques. Pour cela, le serveur 104 met en œuvre une étape 2001 de regroupement des données collectées selon la zone géographique où elles ont été collectées. Par exemple et de façon non limitative, le serveur peut déterminer des zones circulaires d'une certaine taille, par exemple des zones circulaires de 100 mètres de diamètre, et former une série temporelle pour chaque zone à partir des mesures respectivement associées à chacune des zones. Autrement dit, les données de qualité relatives à une même zone géographique sont agrégées pour former une unique série temporelle, indépendamment du terminal qui les a collectées et transmises. La collecte et l'estimation de la qualité des liens est ainsi collaborative, et le serveur dispose d'un grand nombre d'évaluation de qualité radio permettant de couvrir largement un territoire. Les indicateurs de qualité collectées peuvent également être regroupés par un algorithme de clustering appliqué aux coordonnées géographiques associées au données collectées, par exemple un algorithme de type k-means ou DBSCAN.

Dans un mode particulier de réalisation, le serveur 104 associe en outre une donnée d'identification du lien radio aux mesures collectées. Dans le contexte de l'invention, on distingue un premier lien radio entre la station de base 100 et le terminal 102 lorsque le terminal est à une première position dans la zone de couverture 101, d'un deuxième lien radio entre la même station de base 100 et le même terminal 102 lorsque le terminal est à une deuxième position dans la zone de couverture 101. Ainsi, l'identifiant d'un lien radio dans le contexte de l'invention se rapporte à l'identification d'un trajet particulier de propagation du signal d'un emplacement à un autre. Une telle donnée d'identification du lien peut ainsi être définie par les positions respectives de l'émetteur et du récepteur, ou de leur position relative. L'identification du lien peut par exemple se baser sur la position d'un terminal 102 au moment d'une mesure et un identifiant de la station de base 100. Lorsque l'émetteur et le récepteur sont fixes, le lien peut être identifié par un identifiant du récepteur et/ou de l'émetteur. De cette façon, le serveur 104 peut identifier clairement le lien dont la qualité est indiquée par un terminal. Une telle disposition est particulièrement avantageuse dans un réseau cellulaire dans lequel différents points d'accès radio sont accessibles depuis un emplacement donné. Le serveur peut ainsi déterminer des séries temporelles spécifiques décrivant sans ambigüité l'évolution de la qualité d'un lien entre une position géographique et un point d'accès particulier.

Le serveur obtient ainsi une pluralité de séries temporelles décrivant chacune l'évolution de la qualité d'un lien radiofréquence observée entre une position géographique particulière et un émetteur particulier. On précise que les séries temporelles constituées peuvent bien entendu faire l'objet d'un prétraitement comprenant le filtrage des valeurs aberrantes et la normalisation des mesures afin d'assurer une homogénéité des données, ce qui est particulièrement avantageux lorsque les mesures sont effectuées par une pluralité de terminaux 102 de différents types qui peuvent être calibrés de façon différente ou présenter une des performances différentes.

Lors d'une étape 201, au moins une série temporelle déterminée par le serveur 104 est appliquée à un modèle prédictif pour estimer au moins une valeur représentative d'une qualité du lien radio associé à la série temporelle pour au moins une date future. Différents modèles prédictifs peuvent être envisagés. Une première alternative préférée consiste à utiliser un modèle autorégressif, qui ne nécessite pas d'entraînement préalable et qui est particulièrement adapté pour traiter des séries temporelles. Une seconde alternative est d'utiliser un modèle de machine learning, tel qu'un réseau de neurones, entraîné à partir de données historiques étiquetées. Une troisième alternative est d'utiliser un modèle hybride, combinant un modèle autorégressif et un modèle de machine learning.

A partir d'une une série chronologique représentative, par exemple {Y(t)} où Y(t) désigne la valeur de la mesure à l'instant t, un modèle autorégressif d'ordre p, noté AR(p), s'exprime mathématiquement par la relation suivante : $Y \left(t\right) = {a}_{1} . Y \left(t-1\right) + {a}_{2} . Y \left(t-2\right) + ⋯ + {a}_{p} . Y \left(t-p\right) + ε \left(t\right)$ où *a*₁, *a*₂, ... , *aₚ* sont les coefficients à estimer et *ε*(*t*) représente le bruit ou la composante non expliquée.

Les coefficients *a*₁, *a*₂, ... , *aₚ* sont estimés de manière classique à partir des données historiques de la série à l'aide d'une méthode d'estimation, par exemple la régression par moindres carrés ordinaires (OLS) appliquée sur les observations disponibles ou l'estimation par maximum de vraisemblance.

Une fois les coefficients estimés, le modèle autorégressif est utilisé pour prédire des valeurs futures de la série. Pour cela, les valeurs passées, déjà observées, sont substituées dans l'équation AR afin de produire une prévision pour Y(t+1) ou pour des instants ultérieurs.

Selon un mode de réalisation particulier, un réseau de neurones récurrent, en particulier un LSTM (Long Short-Term Memory), peut être utilisé en alternative (ou en combinaison) à un modèle autorégressif pour estimer des valeurs futures de qualité d'un lien radio. Les LSTM sont conçus pour capturer des dépendances temporelles à long terme dans les données séquentielles, ce qui permet de modéliser les évolutions complexes et non linéaires des séries temporelles de qualité d'un lien, et ainsi mieux tenir compte de la saisonnalité (perte de feuillage et taux de croissance cyclique pour la végétation par exemple). En complément, des variantes comme le GRU (Gated Recurrent Unit) offrent une architecture simplifiée avec des performances comparables tout en réduisant la complexité computationnelle. Une GRU est en effet particulièrement efficace pour capturer des dépendances à long terme dans des données séquentielles. Ces réseaux peuvent être entraînés sur des historiques de mesures étiquetés pour apprendre automatiquement les relations temporelles et fournir des prédictions robustes.

Afin de renforcer la fiabilité des estimations de qualité de lien futures, des intervalles de confiance peuvent être calculés pour chaque valeur prédite. Ces intervalles reposent sur l'estimation de la variance des résidus issus de la calibration du modèle, et permettent d'indiquer le degré d'incertitude associé à chaque prévision. Par exemple, la méthode classique consiste à supposer que les erreurs suivent une distribution normale et à utiliser la statistique t de Student afin de définir l'intervalle : $IC \left(t\right) = \left[μ\left(t\right)-k⋅σ\left(t\right),μ\left(t\right)+k⋅σ\left(t\right)\right]$ où µ(t) est la valeur prédite, σ(t) est l'écart-type estimé des erreurs à l'instant t, et k est la constante correspondant au niveau de confiance choisi (par exemple, k = 1,96 pour un niveau de 95 %).

Lors d'une étape 202, le serveur 104 détermine, à partir des valeurs prédites, une date future, dite date critique, à laquelle la qualité du lien radio est susceptible d'atteindre un premier seuil critique S1.

Pour cela, le serveur 104 peut comparer une ou plusieurs valeurs de qualité estimées par le modèle prédictif pour une période future à un premier seuil S1. Le seuil S1 est par exemple fixé en fonction d'une qualité de service minimale que souhaite offrir l'opérateur du réseau d'accès ou de l'émetteur radiofréquence. Une telle comparaison permet de déterminer une date critique D à laquelle la qualité de service est susceptible de descendre au-dessous du seuil critique S1.

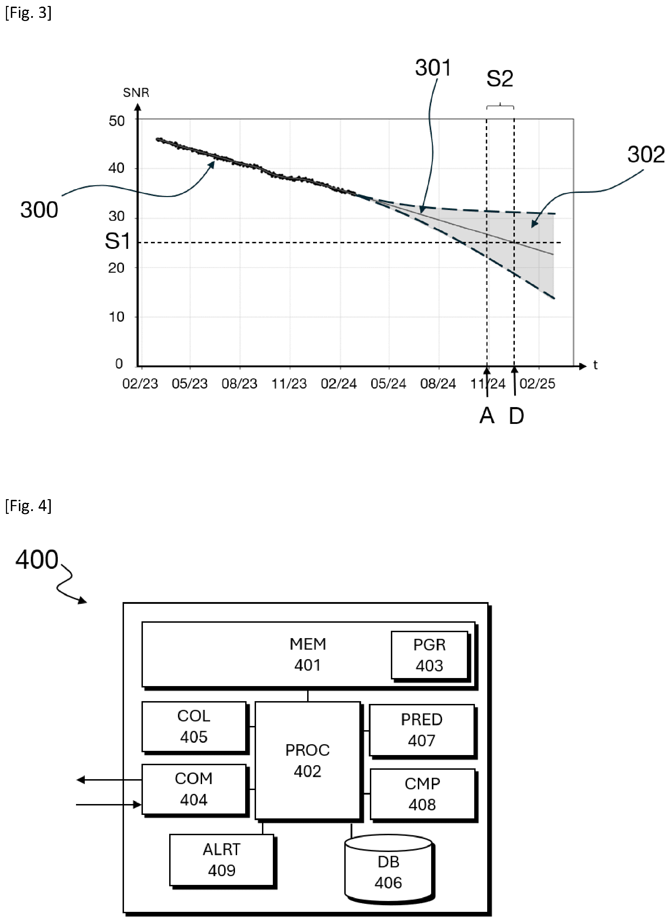

La figure 3 illustre typiquement une série temporelle de mesures collectées 300, la courbe prédictive 301 obtenue à partir d'un modèle autorégressif ainsi que les intervalles de confiance 302 associés. Les données estimées permettent de ainsi de déterminer une date D à laquelle la qualité du lien descend au-dessous d'un seuil S1.

Selon un mode particulier de réalisation, le serveur 104 détermine une date à laquelle la qualité du lien radio est susceptible d'atteindre un premier seuil S1 en comparant les valeurs prédites avec le seuil S1 et en sélectionnant la date à laquelle la valeur prédite tombe sous le seuil S1.

Selon un mode de réalisation particulier, le serveur 104 détermine une date à laquelle la qualité du lien radio est susceptible d'atteindre un premier seuil S1 en comparant les valeurs prédites avec la borne inférieure de l'intervalle de confiance associé à une valeur prédite et en sélectionnant la date à laquelle la borne inférieure de l'intervalle de confiance tombe sous le seuil S1. En variante, le serveur utilise une valeur comprise entre la borne inférieure de l'intervalle de confiance et la valeur prédite pour la comparaison avec le seuil.

Dans une réalisation particulière, le serveur 104 détermine une date à laquelle la qualité du lien radio est susceptible d'atteindre un premier seuil S1 en calculant, pour une pluralité d'instants futurs, une probabilité P que la qualité radio prédite pour le lien tombe en dessous du seuil critique S1. La date critique D est alors déterminée comme étant l'instant à partir duquel la probabilité P dépasse une certaine valeur, par exemple 90%. Cette approche permet ainsi d'anticiper le moment où il devient hautement probable que la qualité de service ne réponde plus aux exigences.

Pour cela, le serveur 104 peut par exemple normaliser la différence entre le seuil critique S1 et la valeur prédite µ(t) en l'exprimant en nombre d'écarts-types par la formule suivante : $Z = \frac{\left(S1-μ\left(t\right)\right)}{σ \left(t\right)}$

Sous l'hypothèse d'une distribution normale, le serveur 104 utilise le nombre d'écarts-types Z calculé pour estimer la probabilité que la valeur prédite soit inférieure ou supérieure à un certain seuil critique S1.

Le serveur 104 détermine ainsi une date à laquelle la qualité du lien radio est susceptible d'atteindre un premier seuil S1 avec une probabilité P en comparant les probabilités de dépassement de seuil S1 calculées pour les valeurs prédites avec un probabilité cible, et en sélectionnant la date à laquelle la probabilité d'atteinte du seuil S1 est supérieure ou égale à la probabilité cible.

Lors d'une étape 203, le serveur 104 génère un événement associé à un lien radio particulier, comprenant au moins une date de criticité inférieure ou égale à la date déterminée. De préférence, l'événement est généré pour une date strictement inférieure à la date critique déterminée selon l'étape 202. Dans une réalisation particulière, l'événement est généré à une date calculée par application d'un délai d'anticipation S2 à la date critique. Le délai S2 peut correspondre au temps nécessaire pour organiser une intervention avant que la qualité du lien n'atteigne le seuil critique S1. Par exemple, le délai S2 peut être fixé à d'un (1) mois, de sorte qu'une alerte est générée un (1) mois avant la date critique déterminée pour un lien particulier. Ainsi, l'opérateur du réseau peut planifier une intervention de maintenance, comme un élagage ou une modification d'infrastructure dans le délai S2, avant que la qualité de service ne descende au-dessous du minimum acceptable.

La figure 3 montre par exemple une date A à laquelle une alerte est générée lorsqu'un dépassement du seuil critique S1 est déterminé à une D. Le délai entre la date de l'alerte A et la date de d'atteinte du seuil D correspond au seuil S2.

Selon un mode particulier de réalisation, le procédé comprend une étape optionnelle au cours de laquelle les données collectées pour un lien particulier sont appliquées à un deuxième modèle prédictif de classification adapté pour déterminer une cause de l'évolution de la qualité du lien, le délai de génération de l'alerte S2 étant ajusté selon la cause déterminée. Le deuxième modèle est entrainé au préalable à partir de séries temporelles d'entrainement comprenant des observations de qualité de liens radio. Les séries d'entrainement sont labellisée, c'est-à-dire qu'elles sont associées à des étiquettes permettant d'associer une série particulière à un facteur environnemental, par exemple « croissance de végétation » ou « des travaux de génie civil ». Le modèle est entrainé de manière classique à partir d'un jeu de données comprenant une pluralité de séries étiquetées dont une partie est utilisé pour l'entrainement et une autre pour la validation du modèle. En appliquant le deuxième modèle ainsi entrainé aux données collectées, le serveur 104 peut déterminer la cause d'une évolution de la qualité d'un lien radio, et en particulier déterminer si une baisse de la qualité est due à la construction d'un bâtiment ou à la croissance de la végétation par exemple. Dans une réalisation particulière, l'événement générée par le serveur 104 comprend la cause déterminée, ce qui permet de déterminer plus précisément une date d'intervention.

Selon une réalisation particulière, le serveur 104 ajuste le délai S2 de génération de l'alerte en fonction la cause identifiée par application du deuxième modèle. Par exemple, lorsque la cause identifiée est la croissance d'un arbre, le délai S2 est ajusté à un (1) mois pour planifier un élagage, alors que lorsque la cause est une construction de bâtiment, le délai S2 est ajusté à deux (2) mois ou plus pour permettre une modification lourde de l'infrastructure tel qu'un déplacement d'antenne relais.

Le procédé permet ainsi au serveur 104 de surveiller et d'anticiper des baisses de qualité de service sur une pluralité de liens radio pour générer des alertes permettant de planifier des opérations de maintenance, comme des élagages et des modifications d'infrastructure, ou des reconfigurations de systèmes radio. Le serveur 104 peut ainsi générer une pluralité d'événements pour une pluralité de liens. Un événement peut notamment comprendre :
- un identifiant du lien, et/ou une indication géographique permettant d'identifier un lieu d'intervention,
- une date à laquelle un seuil critique de qualité est susceptible d'être atteint et/ou une date d'intervention préférentielle,
- une cause de la dégradation d'un lien et/ou un type d'intervention à envisager.

L'événement généré peut en outre prendre différentes formes. Il peut s'agir par exemple d'une notification transmise à un autre dispositif ou mise à disposition de l'événement à d'autres dispositifs par l'intermédiaire d'une API (Application Programming Interface), à un enregistrement dans une base de données, d'un courriel ou d'un SMS envoyé à des personnes en charge de la planification des opérations de maintenance, et/ou d'un indicateur sur une interface de contrôle du réseau.

Dans certaines conditions, une grande quantité d'événements peuvent être générés sur une courte période (par exemple, la croissance de la végétation est plus importante au printemps). Ainsi, afin de permettre une meilleure planification des opérations de maintenance, le serveur 104 peut calculer une densité temporelle et/ou géographique des événements déterminés et ajuster le délai d'alerte S2 associé à certains liens de façon à étaler les événements lorsque des seuils critiques risquent d'être atteints pour une pluralité de liens sur une même période. Ainsi par exemple, lorsque qu'un grand nombre de dépassement de seuil critique est prédit pour une même période, par exemple pendant les fêtes de fin d'année où le service de maintenance fonctionne en effectif limité, les délais S2 associés aux différentes séries impliquées sont ajustés pour mieux répartir les dates d'intervention et éviter ainsi un engorgement du service de maintenance. L'ajustement des seuils S2 associés aux différentes séries impliquées est tel que la densité d'intervention résultante de l'ajustement est inférieure à un seuil particulier.

Dans un mode de réalisation particulier, le serveur 104 peut mettre en œuvre une étape de comparaison des séries temporelles collectées et des estimations déterminées pour un ensemble de liens sélectionnés selon un critère de proximité. Un tel critère de proximité peut correspondre à une proximité géographique des emplacements associés aux séries temporelles, et/ou au fait qu'un émetteur est commun à plusieurs séries temporelles, et/ou à des émetteurs différents mais géographiquement proches. Lorsque la comparaison des séries temporelles (et/ou des prédictions réalisées pour ces séries temporelles) fait apparaître une similitude dans l'évolution des valeurs de qualité, le serveur 104 peut alors générer un événement commun aux différents liens. Une telle disposition est particulièrement avantageuse lorsque la qualité des liens est affectée par l'urbanisation d'un nouveau quartier ou la croissance d'une forêt. Les séries temporelles peuvent être synchronisées puis comparées en utilisant des techniques statistiques classiques incluant des indicateurs de corrélation (par exemple une autocorrélation spatiale basé sur un indice de Moran) et regroupées par des techniques de clustering.

La figure 4 représente l'architecture d'un dispositif 400 adapté pour mettre en œuvre le procédé de planification selon un mode particulier de réalisation.

Le dispositif 400 comprend un module de traitement de données comprenant un espace de stockage 401, par exemple une mémoire (MEM), une unité de traitement 402, équipée par exemple d'un microprocesseur (PROC), et pilotée par un programme d'ordinateur (PGR) 403 dont les instructions sont configurées pour mettre en œuvre une réalisation particulière du procédé de planification décrit en relation avec la figure 2, et notamment les étapes de collecte d'une pluralité de données temporelles représentatives d'une qualité d'un lien radio entre l'émetteur et au moins un récepteur présent dans ladite zone de couverture de l'émetteur pour former au moins une série temporelle de données de qualité, d'estimation d'au moins une valeur représentative d'une qualité du lien radio pour au moins une date future par application de ladite au moins une série temporelle à un modèle prédictif, de détermination, à partir des valeurs estimées, d'une date future à laquelle la qualité du lien radio est susceptible d'atteindre un premier seuil, et de génération d'un événement associé au lien radio comprenant au moins une date inférieure ou égale à la date déterminée.

A l'initialisation, les instructions de code du programme d'ordinateur 403 sont par exemple chargées dans la mémoire 401 avant d'être exécutées par le processeur de l'unité de traitement 402. Le microprocesseur de l'unité de traitement 402 met en œuvre, selon les instructions du programme d'ordinateur 403, les étapes du procédé de planification décrites ci-avant en référence à la figure 2.

Pour cela, outre la mémoire 401 et le processeur 402, le dispositif comprend des moyens de communication 404, par exemple une interface réseau de type Ethernet, WiFi ou autre. Les moyens de communication 404 permettent notamment au dispositif 400 d'échanger des messages avec d'autres dispositifs par l'intermédiaire d'un réseau de communication, et en particulier de recevoir des messages comprenant une indication de qualité d'un lien radiofréquence évaluée par un terminal ou une station de base.

Le dispositif 400 comprend aussi un module de collecte 405 configuré pour collecter une pluralité de données temporelles représentatives d'une qualité d'un lien radio entre l'émetteur et au moins un récepteur présent dans ladite zone de couverture de l'émetteur. Le module de collecte peut être mis en œuvre par des instructions de programme d'ordinateur configurées pour obtenir des messages reçus par le module de communication 404 et former des séries temporelles de valeurs de qualité de service par lien radio et pour mémoriser les séries ainsi déterminées dans une base de données 406. Selon une réalisation particulière, les instructions du module de collecte 405 sont configurées pour regrouper les données de qualité de lien radio sur la base d'une information de localisation et/ou d'un identifiant de l'émetteur associé aux mesures de qualité de lien radio en mettant en œuvre un algorithme de clustering.

Le dispositif 400 comprend également un module de prédiction 407 adapté pour estimer des valeurs de qualité d'un lien de communication radio pour au moins une date future à partir d'au moins une série temporelle mémorisée dans la base de données 406. Pour cela, le module 407 comprend des instructions de programme configurées pour mettre en œuvre un modèle de prédiction autorégressif ou un réseau de neurones de type LSTM entrainé au préalable à partir de séries temporelles étiquetées, ou une combinaison des deux types de modèle.

Le dispositif 400 comprend un module de détermination d'une date critique 408 adapté pour déterminer une date future à laquelle la qualité du lien radio est susceptible de tomber sous un premier seuil. Le module 408 peut être mis en œuvre par des instructions de programme configurées pour comparer chaque valeur prédite d'une série temporelle avec la valeur seuil et pour déterminer une date associée à une valeur de qualité prédite inférieure ou égale au seuil critique, et/ou pour comparer une borne inférieur d'un intervalle de confiance calculé pour les valeurs prédites avec le seuil critique, et/ou pour calculer une probabilité d'atteinte du seuil pour chaque valeur prédite et pour comparer cette probabilité avec une probabilité cible définie au préalable.

Le dispositif comprend enfin un module de génération d'événement 409 configuré pour générer un événement lorsque le comparateur détecte une date future à laquelle la valeur de qualité prédite est inférieure au seuil critique, et pour transmettre l'événement à un autre dispositif par l'intermédiaire du module de communication 404. Le module 404 peut être mis en œuvre par des instructions de programme d'ordinateur configurées pour générer et transmettre un message ou une notification ou pour stocker les informations caractéristiques de l'événement dans une base de données accessibles à d'autres dispositif.

Dans une réalisation particulière, le dispositif 400 est intégré à un serveur d'un réseau de communication.

## Revendications

1. Procédé de planification d'au moins une opération de maintenance dans une zone de couverture d'un émetteur radiofréquence, le procédé comprenant les étapes suivantes :
- Collecte (200) d'une pluralité de données temporelles représentatives d'une qualité d'un lien radio entre l'émetteur et au moins un récepteur présent dans ladite zone de couverture de l'émetteur pour former au moins une série temporelle de données de qualité,
- Estimation (201) d'au moins une valeur représentative d'une qualité du lien radio pour au moins une date future par application de ladite au moins une série temporelle à un modèle prédictif,
- Détermination (202), à partir des valeurs estimées, d'une date future à laquelle la qualité du lien radio est susceptible d'atteindre un premier seuil,
- Génération (203) d'un événement associé au lien radio comprenant au moins une date inférieure ou égale à la date déterminée.

2. Procédé selon la revendication 1 dans lequel le modèle prédictif est un modèle autorégressif.

3. Procédé selon l'une quelconque des revendications précédentes dans lequel les données collectées sont appliquées à un deuxième modèle prédictif de classification adapté pour déterminer une cause de l'évolution de la qualité du lien radio, l'alerte générée comprenant au moins une date ajustée selon la cause déterminée.

4. Procédé selon l'une quelconque des revendications précédentes dans lequel les données collectées comprennent un rapport signal/bruit.

5. Procédé selon l'une quelconque des revendications précédentes dans lequel lune série temporelle appliquée au premier modèle comprend des données collectées régulièrement sur une période d'au moins un an.

6. Procédé selon l'une quelconque des revendications précédentes dans lequel les données collectées sont obtenues auprès d'une pluralité de terminaux mobiles évoluant dans ladite zone de couverture.

7. Procédé selon la revendication 6 dans lequel les données collectées sont groupées selon une donnée de localisation associée auxdites données collectées pour former une pluralité séries temporelles distinctes.

8. Dispositif de planification d'au moins une opération de maintenance dans une zone de couverture d'un émetteur radiofréquence, le dispositif comprenant un processeur (402) couplé à une mémoire (401) dans laquelle sont enregistrées des instructions (403) configurées pour mettre en œuvre les étapes suivantes :
- Collecte d'une pluralité de données temporelles représentatives d'une qualité d'un lien radio entre l'émetteur et au moins un récepteur présent dans ladite zone de couverture de l'émetteur pour former au moins une série temporelle de données de qualité,
- Estimation d'au moins une valeur représentative d'une qualité du lien radio pour au moins une date future par application de ladite au moins une série temporelle à un modèle prédictif,
- Détermination, à partir des valeurs estimées, d'une date future à laquelle la qualité du lien radio est susceptible d'atteindre un premier seuil,
- Génération d'un événement associé au lien radio comprenant au moins une date inférieure ou égale à la date déterminée.

9. Serveur comprenant un dispositif de planification selon la revendication 8.

10. Programme d'ordinateur comportant des instructions adaptées à la mise en œuvre des étapes d'un procédé de planification selon l'une quelconque des revendications 1 à 7, lorsque le programme est exécuté par un processeur.

11. Support d'information lisible par un ordinateur sur lequel est enregistré un programme d'ordinateur comprenant des instructions pour l'exécution des étapes d'un procédé de planification selon l'une quelconque des revendications 1 à 7.
